# EUROPÄISCHE PATENTSCHRIFT

(11) **EP 1 058 220 B1**
(45) Veröffentlichungstag und Bekanntmachung des Hinweises auf die Patenterteilung: **25.02.2004**
(21) Anmeldenummer: 00110749.9
(22) Anmeldetag: 19.05.2000
(51) Int. Cl.: G08G 1/09

(54) **Kommunikationssystem für ein Fahrzeug**
Communications system for a vehicle
Système de communications pour véhicule

(30) Priorität: 04.06.1999 DE 19925570
(43) Veröffentlichungstag der Anmeldung: 06.12.2000
(73) Patentinhaber: DaimlerChrysler AG, 70567 Stuttgart (DE)
(72) Erfinder: Göbel, Fridjof, 74354 Besigheim (DE); Lenart, Siegleif, 73760 Ostfildern (DE); Spaney, Roger, 71088 Holzgerlingen (DE); Starman, Frank, 71034 Böblingen (DE)

(56) Entgegenhaltungen:
- EP-A- 0 387 516
- EP-A- 0 515 042
- WO-A-97/34431
- DE-A- 4 225 013
- SEOKHOON LEE ET AL: "Toward the next generation public traffic information system using Internet" PROCEEDINGS. HIGH PERFORMANCE COMPUTING ON THE INFORMATION SUPERHIGHWAY,XX,XX, 28. April 1997 (1997-04-28), Seiten 505-510, XP002147421

## Beschreibung

Die Erfindung bezieht sich auf ein Kommunikationssystem für ein Fahrzeug nach dem Oberbegriff des Anspruchs 1. Ein solches System beinhaltet eine oder mehrere Anwendungseinheiten, d. h. Einheiten, die zugehörige Anwendungsfunktionen durchführen, sowie mehrere Funkkommunikationskanäle zur Kommunikation der Anwendungseinheiten mit der Fahrzeugaußenwelt, insbesondere unterschiedlichen Mobilfunkkommunikationskanälen. Derartige Anwendungsfunktionen werden auch als Telematikanwendungen bezeichnet und gewinnen in modernen Automobilen eine immer größere Bedeutung. Beispielhaft sei hier das in der Offenlegungsschrift DE 196 25 002 A1 offenbarte Fahrzeugkommunikationssystem genannt, das eine Vielzahl von Telematikanwendungen umfaßt, wobei dort mittels einer adaptiven Applikationssteuerung eine flexible Zuordnung vorhandener Geräteeinheiten zu einer jeweils durchzuführenden Anwendungsfunktion angestrebt wird. Auch die DE 196 40 735 A1 und die DE 197 01 039 C1 beschreiben Telematikeinrichtungen für Kraftfahrzeuge.

Ein Problem der herkömmlichem Fahrzeugkommunikationssysteme der eingangs genannten Art besteht darin, daß die zu verschiedenen Funkkommunikationskanälen gehörigen Systemteile weitgehend parallel und unabhängig voneinander implementiert sind und dementsprechend unkoordiniert arbeiten. Wichtige Beispiele solcher unterschiedlicher, inkompatibler Funkkommunikationskanäle sind die diversen, weltweit existierenden Mobilfunkarten, wie sie unter den Abkürzungen GSM, PCS, AMPS, D-AMPS bzw. TDMA, CDMA, Iridium und UMTS bekannt sind.

Der Erfindung liegt als technisches Problem die Bereitstellung eines Kommunikationssystems der eingangs genannten Art zugrunde, das eine in dieser Hinsicht verbesserte, flexible und abgestimmte Nutzung der Funkkommunikationskanäle bei der Durchführung von fahrzeugseitig implementierten Anwendungsfunktionen ermöglicht.

Die Erfindung löst dieses Problem durch die Bereitstellung eines Kommunikationssystems mit den Merkmalen des Anspruchs 1. Dieses System beinhaltet charakteristischerweise eine Kommunikationsplattformeinheit, welche die eine oder mehreren, fahrzeugseitig implementierten Anwendungseinheiten variabel an die mehreren verwendbaren Funkkommunikationskanäle anzubinden vermag. Die Kommunikationsplattformeinheit stellt auf diese Weise eine zentrale Systemkomponente für die Bearbeitung der Anwendüngsfunktionen dar. Sie ist in der Lage, Kommunikationsvorgänge, die eine Anwendungseinheit zur Durchführung ihrer Anwendungsfunktion benötigt, jeweils dem nach vorgebbaren Kriterien gerade günstigsten Funkkommunikationskanal zuzuweisen, über den die gewünschten Informationen für die Anwendungseinheit beschafft bzw. von der Anwendungseinheit zur Fahrzeugaußenwelt weitergeleitet werden können, wobei die Kriterien unter anderem die momentane Verfügbarkeit der Funkkommunikationskanäle umfassen. Dieselbe Anwendungsfunktion kann auf diese Weise z.B. je nach dem räumlichen Gebiet, in welchem sich das Fahrzeug befindet, einen jeweils gerade vorteilhaftesten von verschiedenen fahrzeugseitig implementierten Mobilfunkkanälen nutzen. Des weiteren ist eine relativ einfache Systemadaption an neu implementierte Funkkommunikationskanäle und/oder Anwendungen möglich, indem lediglich in der Kommunikationsplattformeinheit die entsprechenden Modifikationen bzw. Erweiterungen, beispielsweise durch Laden zugehöriger Software, vorgenommen werden müssen, wonach dann die zu dem neu hinzugekommenen Funkkommunikationskanal bzw. der neu hinzugekommenen Anwendungsfunktion gehörigen Hardwarekomponenten einfach an die Kommunikationsplattformeinheit angeschlossen werden können.

In Weiterbildung der Erfindung ist die Kommunikationsplattformeinheit gemaß Anspruch 2 als separates Hardwaremodul des Kommunikationssystems realisiert und kann somit als baulich einheitliche Komponente ein Modul eines modularen Systemaufbaus bilden.

In einer Weiterbildung der Erfindung nach Anspruch 3 ist der Kommunikationsplattformeinheit eine Reservebatterie zugeordnet, mit der die Kommunikatiensplattformeinheit bei einem Ausfall der Hauptbatterieversorgung sicher weiterbetrieben werden kann.

In einer Weiterbildung der Erfindung nach Anspruch 4 sind die Anwendungseinheiten an einen gemeinsamen Datenbus angeschlossen, wie einen Telematik-Datenbus, an den die Kommunikationsplattformeinheit angekoppelt ist, so daß letztere über diesen Datenbus Zugriff auf die verschiedenen Anwendungseinheiten hat.

Bei einem nach Anspruch 5 weitergebildeten Kommunikationssystem sind sowohl Anwendungseinheiten für interne Anwendungsfunktionen, wie Notruf (ECall), FCD(Floating Car Data)-Funktion, Spurverfolgung eines gestohlenen Fahrzeugs, Schließanlagen-Fernbedienung etc., als auch solche für externe, vernetzte Anwendungsfunktionen, wie dynamische Zielführung, Verkehrslagemeldung, Mobilfunktelefon etc., vorgesehen.

Bei einem nach Anspruch 6 weitergebildeten Kommunikationssystem sind in der Kommunikationsplattformeinheit Systemmanagementinformationen über Geräte-Basiseinstellungen und Verfügbarkeit von nutzbaren Funkkommunikationskanälen und über eine vorgebbare Prioritätseinstufung der Anwendungsfunktionen abgelegt. Diese abgelegten Informationen konnen von der Kommunikationsplattformeinheit für ein optimales Management der zur Durchführung der Anwendungsfunktionen benötigten Kommunikationsabläufe genutzt werden.

In einer Weiterbildung der Erfindung nach Anspruch 7 enthält die Kommunikationsplattformeinheit eine Kommunikations-Managementeinheit, welche die anwendungsfunktionsbezogenen Geräte, Dienste und Schnittstellen steuert und die Geräte und Dienste in Abhängigkeit von der verfügbarkeit und einer vorgebbaren Prioritätseinstufung aktiviert. Dazu kann die Kommunikations-Managementeinheit gegebenenfalls von entsprechend abgelegten Systemmanagementinformationen über Geräte-Basiseinstellungen, Verfügbarkeit von nutzbaren Funkkommunikationskanälen und Priorität der jeweiligen Anwendungsfunktion Gebrauch machen.

Bei einem nach Anspruch 8 weitergebildeten Kommunikationssystem sind in der Kommunikationsplattformeinheit Anwendungsfunktions-Schnittstelleneinheiten für die verschiedenen Anwendungsfunktionen derart implementiert, daß ein einheitlicher Befehlssatz für die Kommunikstionsablaufbefehle unabhängig vom gerade benutzten Funkkommunikationskanal und unabhängig von den verwendeten Vermittlungs-, Transport- und Sitzungsprotokollen und unabhängig davon, ob eine interne oder externe, vernetzte Anwendungsfunktion vorliegr, verwendbar ist. Diese Maßnahme erlaubt eine flexible Ankopplung von Anwendungseinheiten einerseits und von Endgeräten verschiedener Funkkommunikationskanäle andererseits an die Kommunikationsplattformeinheit und damit die Einbindung dieser Komponenten in das von der Kommunikationsplattformeinheit bewirkte Kommunikationsmanagement, ohne daß dies signifikante Modifikationen in den Kommunikationsbefehlsdatenstrukturen erfordert.

Eine vorteilhafte Ausführungsform der Erfindung ist in den Zeichnungen darstellt und wird nachfolgend beschrieben. Hierbei zeigen:
- Fig. 1: ein Übersichtsblockdiagramm eines Kommunikationssystems für ein Fahrzeug mit Kommunikationsplattformeinheit zur zentralen, flexiblen Kopplung von Anwendungseinheiten und Funkkommunikationskanal-Endgeräten,
- Fig. 2: ein detaillierteres Blockdiagramm der Systemarchitektur des Kommunikationssystems von Fig. 1,
- Fig. 3: ein Übersichtsblockdiagramm der funktioneill modularen Struktur der Kommunikationsplattformeinheit von Fig. 1,
- Fig. 4: ein detaillierteres Blockdiagramm der Systemarchitektur der Kommunikationsplattformeinheit und
- Fig. 5: ein schematisches Blockdiagramm zur Veranschaulichung der Funktionalität einer in der Kommunikationsplattformeinheit implementierten Kommunikations-Managementeinheit.

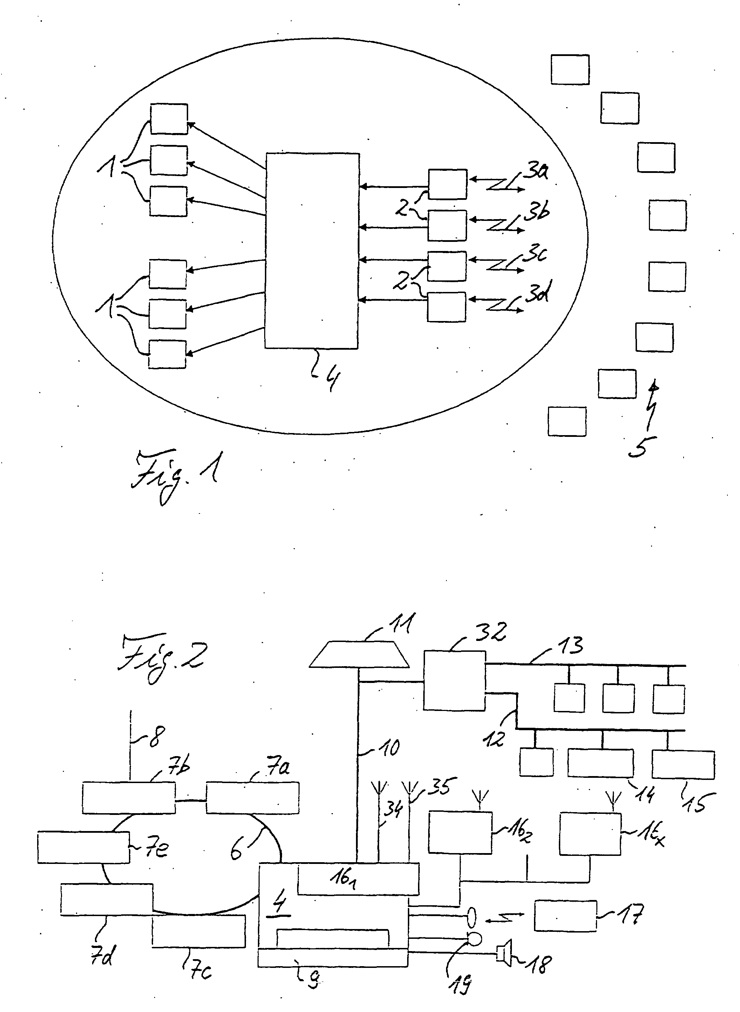

Fig. 1 zeigt in einer Grobübersicht ein Kommunikationssystem für ein Fahrzeug, wobei das Kommunikationssystem fahrzeugseitig eine Mehrzahl von Anwendungseinheiten 1 vor allem für Telematikanwendungen, eine Mehrzahl von Funkkommunikationskanal-Endgeräten 2a bis 2d für unterschiedliche Funkkommunikationskanäle 3a bis 3d sowie eine die Anwendungseinheiten 1 variabel mit den Funkkommunikationskanal-Endgeräten 2 koppelnde, zentrale Kommunikationsplattformeinheit 4 aufweist. Über die verschiedenen Funkkommunikationskanäle 3a bis 3d ist der fahrzeugseitige Systemteil unter anderem in der Lage, mit fahrzeugexterner Dienstanbieter-Infrastruktur, d.h. mit einer Mehrzahl von fahrzeugexternen Dienstanbieterstellen 5, zu kommunizieren.

Die Kommunikationsplattformeinheit 4 ist zur Erfüllung insbesondere folgender Funktionen ausgelegt. Sie bildet eine gemeinsame Plattform für die verschiedenen, auf dem amerikanischen, europäischen und asiatischen Markt gängigen Mobilfunkkommunikationskanäle mit einheitlichem Gehäuse nebst elektrischen Kontakten und Verkabelungen. In die Kommunikationsplattformeinheit 4 kann z.B. über ein KWP2000-Protokoll (Keyword-Protocol 2000) konfigurierbare Software geladen werden. Die Kommunikationsplattformeinheit 4 besitzt eine modulare Hardware-Architektur mit Mobilfunkkommunikationsmodul zur Anbindung unterschiedlicher Mobilfunkkanäle, mit skalierbarer Funktionalität, d.h. Funkktionsblockaufteilung, mit Speicher- und Versorgungsleistungs-Skalierbarkeit zur Erzielung eines sprunglosen Übergangs zu einer jeweils nächsten, auf derselben Hardware basierenden Kommunikationsplattformgeneration und mit Unterstützung eines sogenannten "Extension-Bus", über den die verschiedenen Funkkommunikationskanäle an die Kommunikationsplattformeinheit angekoppelt sind. Auch die Software-Architektur der Kommunikationsplattformeinheit 4 ist modular, wobei die gleichen Telematik-APIs (Application Program Interfaces), d.h. Anwendungsfunktions-Schnittstellen, für interne und vernetzte, externe Telematik-Anwendungen, wie Mobilfunktelefon, Fahrzeugortung, etc. vorgesehen sind. Des weiteren unterstützt die modulare Software-Architektur Multiprotokollfähigkeit z.B. für die Protokolle GATS, WAP (Wireless Application Protocol) und ACP (Arthur Communication Protocol), und erleichtert das Hinzufügen und die Aufwärtskompatibilität von Protokollen und Treibern sowie das Hinzufügen neuer Software-Funktionsmodule, wie z.B. neuer Verschlüsselungsverfahren. Weitere Eigenschaften der Kommunikationsplattformeinheit 4 sind die Unterstützung von verteilten Anwendungen über APIs, das Management einer Mehrzahl von Funkkommunikationskanälen, die Handhabung eines Handys und eines normalen Telefonhörers (Handset) über eine gemeinsame Schnittstelle, die Verwaltung mehrerer Benutzeridentifikationsmodule, d.h. beispielsweise SIMs (Subscriber Identification Modul) für GSM-Mobilfunk, die Unterstützung des Handys oder Handsets unter Nutzung eines fahrzeugseitigen Sendeempfängers und die Bereitstellung von elektrischen Mauterfassungsfunktionen. Dabei managt die Kommunikationsplattformeinheit 4 insbesondere Datenprotokolle, Kanalverfügbarkeit, Ausfallstrategien, Prioritäten, Multiplex- und Zugriffsfunktionen, Sicherheit, Zuverlässigkeit, Aufwärtskompatibilität, Anwendungsfunktions-Schnittstelleneinheiten (APIs), von der Hauptenergiespeisung unabhängige Sicherheitssysteme, Fahrzeugortung etc.

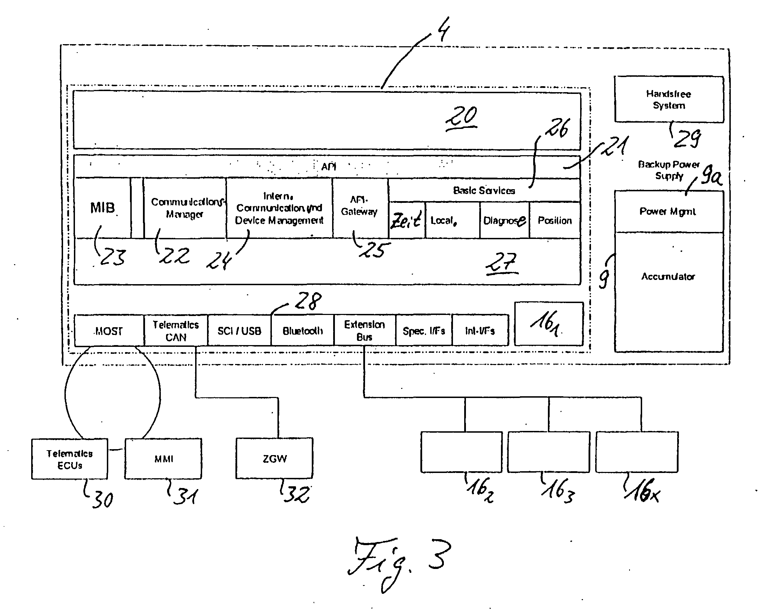

Fig. 2 zeigt detaillierter die Einbettung der Kommunikationsplattformeinheit 4 in das Kommunikationssystem. Wie dort veranschaulicht, ist die Kommunikationsplattformeinheit 4 an einen optischen Telematik-Datenbus 6, speziell einen sogenannten MOST-Bus, angekoppelt, an den zudem verschiedene Geräteeinheiten für Telematikanwendungen angekoppelt sind, wie eine Audioeinheit 7a, ein Radio/Mehrzweck-Modul 7b, eine DVD(Digital Versatile Disk)- und eine SBS(Sprach-Bediensystem)-Einheit 7c, 7d sowie beliebige weitere Geräteeinheiten, stellvertretend durch einen Platzhalterblock 7e angedeutet. Das Radio/Mehrzweck-Modul 7g ist zudem an einen Steuergeräte-Datenbus 8 vom Typ CAN B angekoppelt.

Der Kommunikationsplattformeinheit 4 ist eine aufladbare, leicht zugängliche, wartungsfreie Reservebatterie zugeordnet, über welche der Betrieb der Kommunikationsplattformeinheit 4 auch bei einem Ausfall der Hauptversorgung über die Fahrzeugbordbatterie über eine gewisse Zeitdauer hinweg aufrechterhalten werden kann. Über einen Diagnose-Datenbus 10 kann die Kommunikationsplattformeinheit 4 mit einer Diagnoseprüfeinheit 11 und einem zentralen Diagnose-Gateway 32 verbunden werden. An letzteres sind über Steuergerät-Datenbusse 12, 13 vom Typ CAN 3 bzw. CAN C die daran angeschlossenen Gerätekomponenten angekoppelt, wie ein Multifunktions-Lenkrad 14 mit Tastenbedienfunktionen, eine Armaturenbrettanzeige 15 etc.

Des weiteren sind an die Kommunikationsplattformeinheit 4 ein erstes Funkkommunikationssystem 16₁ eingebaut sowie über einen zugehörigen Datenbus (Extension-Bus) weitere Funkkommunikationssysteme 16₂, ..., 16ₓ angekoppelt. Eine Hauptfunktion der Kommunikationsplattformeinheit 4 besteht in ihrer Fähigkeit, die vorhandenen Funkübertragungssysteme flexibel zur Informationsübertragung bei der Durchführung der verschiedenen Telematik-Anwendungen einzusetzen, d.h. die an den Telematik-Datenbus 6 angeschlossenen Geräteeinheiten 7a bis 7e abhängig vom Systemzustand variabel mit den verschiedenen Funkübertragungssystemen 16₁ bis 16ₓ zwecks Datenübertragung zu verbinden.

An die Kommunikationsplattformeinheit 4 ist zudem sowohl ein Handset als auch ein Handy anschließbar, wie mit einem Funktionsblock 17 symbolisiert, wobei bei angeschlossenem Handy anstelle von dessen Sendeempfänger ein leistungsstärkerer, fahrzeugseitiger Sendeempfänger genutzt werden kann. Zur Akustikausgabe im Notfall ist an die Kommunikationsplattformeinheit 4 ein Lautsprecher 18 angeschlossen, zur Akustikeingabe außerdem ein Mikrofon 19.

Zur Erfüllung der von ihr gewünschten Funktionen besitzt die Kommunikationsplattformeinheit 4 entsprechende Funktionsmodule bezüglich Systemfähigkeiten, wie die erwähnte Reservebatterie, ein Ortungsmodul, einen Speicher für temporäre Datenspeicherung, einen nichtflüchtigen Speicher, einen Sicherheitsspeicherbereich für die Speicherung von Verschlüsselungscodes, Standardschnittstellen für Benutzergeräte wie Laptop, PDA (Personal Digital As-Assistant)etc., interne Sicherheitsanwendungen und einen wartungsfreien Echtzeit-Taktgeber, Funktionsmodule bezüglich Managementfunkionen, wie Authentikations-, Anwendungs- und Konfigurations-Management, "Ressourcen-Management, Eigentest und Diagnose der angekoppelten Systeme, Mehrfach-SIM-Management und Stromversorgungsmanagement, Funktionsmodule bezüglich Schnittstellen, wie für die verbindung zum Telematik-Datenbus 6, zur Ankopplung des Handsets/Handys 17, des Lautsprechers 18 und des Mikrofons 19 und von Steuergerät-Datenbussen sowie als Schnittstelle zu einer Freisprecheinrichtung, und Funktionsmodule für die Kommunikationsvorgänge, insbesondere ein aufprallfestes, austauschbares und mittels Software konfigurierbares Funkkommunikationssystemmodul für die unterschiedlichen Mobilfunksysteme, wie AMPS, TDMA, CDMA, PCS & GSM 900/1800/ 1900, PDC, UMTS, sowie ein Sicherheitsmodul mit Firewall-/Gateway-Funktionalität, ein Kommunikationsmanagementmodul, ein Prioritätsmanagementmodul, ein Modul für Telefon-Sprachübertragung, ein Modul für SMS-Datenübertragung und vom Kommunikationssystem unabhängige APIs. Die über die Kommunikationsplattformeinheit 4 durchführbaren Anwendungsfunktionen gliedern sich in interne Anwendungen einerseits und externe, vernetzte Anwendungen andererseits. Interne Anwendungen sind z.B. Notruf (ECall.), Taxi-Notruf, Tele-Diagnose, FCD-Verkehrslageerfassung, Diebstahlschutz, Spurverfolgung gestohlener Fahrzeuge, Fernauslösung der Türschließanlage und diverse Informationsdienste. Vernetzte Anwendungen sind beispielsweise dynamische Zielführung, Verkehrslagemeldedienste, Telefonbetrieb und weitere Zusatzdienste.

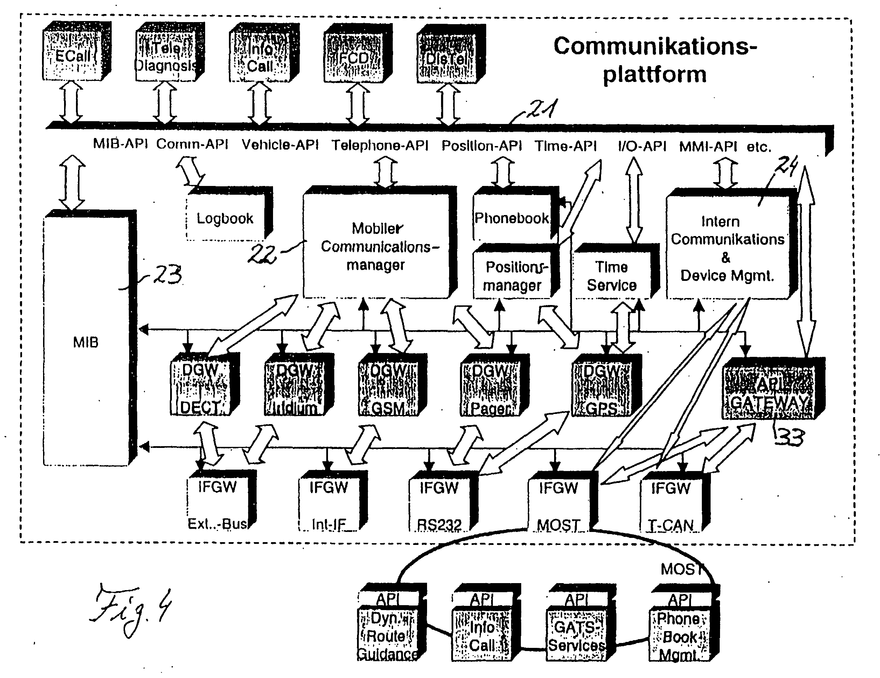

Fig. 3 zeigt den inneren, modularen Aufbau der Kommunikationsplattformeinheit 4 mit ihren diversen Funktionsmodulen. Explizit gezeigt sind insbesondere ein Modul 20 für Sicherheitsanwendungen, eine API-Schicht 21, ein Kommunikationsmanager 22, eine Managementinformationsbasis (MIB) 23, ein Modul 24 für das interne Kommunikations- und Gerätemanagement, ein API-Gateway 25, eine Basisdienstgruppe für Zeittakterzeugung, Diagnose, Ortung und Positionserkennung, ein Sicherheitsmanagement- und Filterungsmodul 27, das wichtige Fahrzeugfunktionen, wie z.B. die MotorSteuerung, vor unberechtigten Eingriffen von außen schützt, eine Schnittstellengruppe 28 mit Schnittstellen für den optischen Telematik-Datenbus (MOST), den Diagnose(Telematik-CAN)-Bus, zum Anschließen von Benutzergeräten (SCI/USB-Schnittstelle), eine Bluetooth-Schnittstelle, über die das Handset bzw. das Handy unter Nutzung eines leistungsstärkeren fahrzeugseitigen Sendeempfängers drahtlos anschließbar ist, in Extension-Bus zum Anschließen der zweiten und weiteren Funkübertragungssysteme 16₂ bis 16ₓ und je nach Bedarf weitere Schnittstellen für spezielle und interne Funktionen. Das erste Funkübertragungssystem 16₁ gehört zum Sicherheitssystem und ist daher in die strichpunktiert markierte Kommunikationsplattformeinheit 4 eingebaut. Das Telematik-Sicherheitssystem umfaßt daneben noch die Reservebatterie 9 mit zugehörigem Batteriemanagement 9a und eine Handsfree-Systemfunktion 29. An den optischen MOST-Bus sind die diversen Telematikeinheiten 30 und eine Benutzerschnittstelle 31 (Man Machine Interface) angekoppelt.

Die Handsfree-Systemfunktion 29 ermöglicht, zur Erhöhung der Zuverlässigkeit der Kommunikationsplattformeinheit 4 die Nutzung des direkt angeschlossenen Lautsprechers 18 und Mikrofon 19, insbesondere bei Ausfall der Fahrzeuglautsprecher, die von der Kommunikationsplattformeinheit 4 im Normalbetrieb genutzt werden, wozu sie mit diesen Lautsprechern höherer Qualität der Fahrzeugverstärkeranlage über den MOST-Bus verbunden ist. Der Reservelautsprecher 18 wird nur für den Notrufbetrieb benutzt.

Die solchermaßen aufgebaute Kommunikationsplattformeinheit 4 ist in der Lage, mehrere Anwendungen parallel auszuführen und unterschiedliche Kommunikationsprotokolle zu unterstützen. Interne und verteilte Anwendungen können auf Geräte und/oder Dienste der Kommunikationsplattformeinheit 4 unter Verwendung der Telamatik-API-Schicht 21 zugreifen. Ein Kommunikationsmanagement steuert den Datenfluß sowie die Aufteilung und Zuweisung gleichzeitig genutzter, interner Ressourcen, wie Mobilfunkkommunikation oder Lokalisierung. Durch die Modularität auch der Software-Architektur der Kommunikationsplattformeinheit 4 ist ein Austausch oder eine Hinzufügung von spezifischen Modulen möglich, ohne daß der gesamte Systemaufbau geändert werden muß. Neue Protokolle und Treiber können sehr leicht durch Laden entsprechender Software über eine drahtlose oder eine CAN-Schnittstelle implementiert werden. Die Architektur der Kommunikationsplattformeinheit 4 gewährleistet Modularität wenigstens hinsichtlich Anwendungen, Mobilfunk-Kommunikationsprotokellen, Sicherheitsprotokollen, Kommunikationsmanagement, API-Erweiterungen, Geräte- und Schnittstellentreibern und der Managementinformations-Datenbank (MIB).

Für die Einbindung des Kommunikationsmoduls in die Hardware-Architektur gibt es zwei Möglichkeiten. In einer ersten Variante ist es in einem Gehäuse der Kommunikationsplattformeinhelt 4 angeordnet oder direkt daran angebracht und besitzt ein eigenes Gehäuse. In einer zweiten Variante wird es als zusätzliche Platine in der Kommunikationsplattformeinheit 4 angeordnet, wobei der Kommunikationsstandard in diesem Fall durch Laden entsprechender Software über die Diagnoseschnittstelle geändert werden kann.

Durch den modularen Hardware-Aufbau kann eine Hauptplatine lange Zeit ohne neues Layout verwendet werden, wobei sie eine CPU, einen RAM- und ROM-Speicher, einen Flash-E²PROM-Speicher etc. enthalten kann. Eine weitere Platine kann die Schnittstellen für den Telematik-Bus und den Steuergeräte-Bus sowie Fahrzeuggeräte-Schnittstellen beinhalten. Weitere Hardware-Module können für die Kommunikationssystemschnittstellen und die Lokalisierung sowie das eingebaute Funkkommunikationssystem 16₁ vorgesehen sein.

Durch diese Einbindung der Kommunikationsplattformeinheit 4 in das Kommunikationssystem brauchen Protokolle niedrigerer Ebene nur in eine und nicht in die verschiedenen Komponenten implementiert werden. Alle Funkkommunikationssysteme werden durch die zentrale Instanz der Kommunikationsplattformeinheit 4 gesteuert, deren Kommunikationsmanagement insbesondere auch die Verfügbarkeit der angeschlossenen Funkübertragungskanäle prüft und die Authentikation für den Zugriff auf die diversen Systemkomponenten managt.

Die Komponenten RAM, ROM und Flash-E²PROM sowie die Prozessorleistung und die Funkkommunikationssysteme können aufwärtskompatibel aufgerüstet werden, ohne daß ein Neuentwurf des Gesamtsystems notwendig ist. Dabei findet insbesondere eine generische Funkkommunikationssystem-Schnittstelle Verwendung, wofür es verschiedene Realisierungsmöglichkeiten gibt, z.B. eine drahtlose Verbindung entsprechend einer Bluetooth-Schnittstelle.

Je nach Art und Anzahl der in die Kommunikationsplattformeinheit 4 eingebetteten Mobilfunkkommunikationsmodule ist diese in der Lage, zur Durchführung von Anwendungen flexibel eine der verschiedenen, auf dem Markt gängigen Mobilfunkkanaltypen anzusprechen, wie GSM 900/1800, AMPS/D-AMPS/CDMA/CDPD/GSM 1900, PDC und W-CDMA/UMTS und IMT2000-Systeme. Über die generische Funkkommunikationssystem-Schnittstelle können weitere Kommunikationsmodule angekoppelt sein, wie das Satellitensystem Iridium oder ähnliche Systeme, z.B. Globalstar, für Sprach- und Datenübertragung, insbesondere in Situationen, in denen kein erdgebundenes Funksystem verfügbar ist, sowie terrestrische oder satellitengestützte Pager-Einrichtungen, wobei über diese auch ein Wecken des Telematik-Systems bewirkt wird, ein Taxiradiosystem und zukünftige Systeme, z.B. Interner-Anwendungen über Satellit.

Als weitere Eigenschaft sind für das eingebaute Funkkommunikationssystem 16₁ sowohl eine Primärantenne 34 als auch eine Reserveantenne 35 zur Erhöhung der Zuverlässigkeit z.B. im Fall eines Fahrzeugunfalls vorgesehen. Eine zugehörige Steuereinheit ist in der Lage, zwischen den zwei Antennen 34, 35 umzuschalten sowie deren Signalstärke und damit deren fehlerfreies Vorhandensein festzustellen.

Das Handset beinhaltet einen SIM-Kartenleser für GSM, UMTS etc. Statt des Handsets kann über eine Bluetooth-Schnittstelle oder eine ähnliche Schnittstelle ein Handy angeschlossen werden. Wenn dieses angeschlossen ist, funktioniert es wie ein Handset, d.h. ein normaler Telefonhörer. Es können verschiedene Aufnahmen für den normalen Telefonhörer und das Handy vorgesehen sein, die alle über dieselbe Schnittstelle und dieselben Leitungsverbindungen an die Steuerung angeschlossen sind und wie eine Bluetooth-Schnittstelle über das jeweilige Funkkommunikationssystem kommunizieren. Im abgeschalteten Zustand des Systems kann das Handset die Telematik-Steuerung aktivieren, und es kann für Tele-Diagnosezwecke ASCII-Text am Handset angezeigt werden. Bevorzugt wird zum Telefonieren über das Handy, wenn es an die Kommunikationsplattformeinheit 4 angekoppelt ist, der mit dieser verbundene, leistungsstärkere, fahrzeugseitige Sendeempfänger benutzt, und der Sendeempfänger des Handys bleibt ausgeschaltet.

Für das eingebettete Kommunikationsmodul wird eine Telematik-SIM-Karte bereitgestellt. Eine intelligente SIM-Karten-Managementeinheit in der Kommunikationsplattformeinheit 4 erlaubt externem Servicepersonal eine Kontaktierung des Systems über die Telematik-SIM. Des weiteren können die SIM-Karten eines Handys oder eines Handsets verarbeitet werden. Es können die Autentikationsmodule und privaten Telefonbücher des Handys oder des Telematik-Kommunikationsmoduls verwenden werden.

Ein Lokalisierungs-Modul stellt Fahrzeugpositionsdaten mit höchstmöglicher Genauigkeit zur Verfügung. Als weitere Eigenschaft wird von der Kommunikationsplattformeinheit 4 eine flächendeckende Fahrzeugnavigationsfunktion per Satellit unterstützt. In Zeiträumen, in denen die Satellitennavigationsdaten nicht verfügbar sind, wird die Position durch fahrzeugseitige Informationen, wie Raddrehzahlen, Geschwindigkeitssignal, Richtungssignal etc., gegebenenfalls unterstützt durch ein Map-Matching, indirekt ermittelt.

Wie gesagt, bildet die Kommunikationsplattformeinheit 4 einen aktiven Bestandteil des optischen MOST-Ringbusses. Über dessen Source-Kanal werden unter Verwendung eines speziellen Übertragungsprotokolls Befehle und kurze Daten übertragen. Sprach-, Ton- und Bilddaten werden über den synchronen Datenkanal übertragen. Für die Übertragung größerer Mengen asynchroner Daten wird der asynchrone Kanal verwendet. Über den MOST-Bus können externe Anwendungseinheiten auf alle APIs zugreifen. Des weiteren kann eine serielle Schnittstelle zur Anbindung eines Airbag-Sensors an die Kommunikationsplattformeinheit 4 vorgesehen sein.

Die Kommunikationsplattformeinheit 4 unterstützt den Zugriff von einem externen Rechner, wie einem Laptop oder PDA, um eine standardisierte Modem- und SSN-Empfänger-Funktionalität bereitzustellen, wozu sie eine Standard-Benutzerschnittstelle vom USB-Bluetooth- oder einem ähnlichen Typ aufweist. Zugriff auf Internet-Dienste ist über einen PPP-Server intern in der Kommunikationsplattformeinheit 4 möglich. Die Standard-Benutzerschnittstelle ist insbesondere in der Lage, einen IrDA- und oder einen Bluetooth-Sendeempfänger zu unterstützen.

Als weitere externe Schnittstellenfunktionalität diagnostiziert die Kommunikationsplattformeinheit 4 alle vorhandenen Bedientasten und detektiert unterbrochene oder kurzgeschlossene Leitungen und klemmende Bedientasten. Jede Anwendung, wie Notruf, Taxinotruf, Tele-Diagnose, Infocall etc., wird durch eine normalerweise unterbrechende Bedientaste aktiviert. Für jede Anwendung steuert die Kommunikationsplattformeinheit 4 eine LED zur Statusanzeige an. Das System kann über eine' Bedientaste oder das Handset (bei Tele-Diagnose) aktiviert werden, selbst wenn die Fahrzeugzündung abgeschaltet ist. Das System kann sich selbst in einer konfigurierbaren Zeitdauer aktivieren und eine bestimmte Anwendung, wie beispielsweise Diebstahlschutz d.h. Stillegung des Fahrzeugs in Verbindung mit einer Dienstezentrale, ausführen, sowie sich selbst deaktivieren, wozu es den Echtzeit-Taktgeber enthält, der manipulationssicher ausgelegt ist. Weitere Schnittstellen der Kommunikationsplattformeinheit 4 betreffen die Fahrzeugenergieversorgung, eine SSN-Antenne, die beiden Antennen 34, 35 des eingebetteten Funkkommunikationssystems, eine Radio-Stummschaltung und eine Zündungszustandserfassung.

Fig. 4 zeigt für eine beispielhafte Systemauslegung die Systemarchitektur der Kommunikationsplattformeinheit 4 in größerem Detail, wobei Datenflüsse mit Doppellinienpfeilen und Konfigurationsdaten mit Einfachlinienpfeilen symbolisiert sind. Wie aus Fig. 4 ersichtlich, beinhaltet die API-Schicht 21 die verschiedenen APIs zur Kommunikation mit den diversen Anwendungen, wie ECall, Tele-Diagnose, Info-Call, FCD und DisTel. Der (Mobilfunk)Kommunikationsmanager 22, die Managementinformationsbasis 23, die interne Kommunikations- und Gerätemanagementeinheit 24 und die Basisdienste, wie Zeitgeber, Positionsmanager, Telefonbuch und Logbuch, kommunizieren zum einen über die API-Schicht 21 und zum anderen, mit Ausnahme der Managementinformationsbasis, mit Gateways (IFGW) für die verschiedenen Schnittstellen, wie Extension-Bus, interne Schnittstelle, RS232, MOST und T-CAN, überwiegend über geeignete Geräte-Gateways (DGW), wie für DECT, GSM, Pager, GPS und Iridium, und im übrigen direkt. Des weiteren ist über ein API-Gateway 33 ein direkter Datenfluß zwischen der API-Schicht 21 und bestimmten Schnittstellen-Gateways (IFGW) möglich.

Zur Erfüllung der verschiedenen Funktionen besitzt die Kommunikationsplattformeinheit 4 ein Echtzeit-Betriebssystem mit Multitasking-Fähigkeit. Dabei wird jede neue Aufgabe gemäß einer vom Kommunikationsmanagement bestimmten Priorität innerhalb einer garantierten Maximaldauer von vorzugsweise weniger als 10ms bearbeitet.

Die Managementinformationsbasis 23 (MIB) bildet die vom Systemmanagement der Kommunikationsplattformeinheit 4 und vom Kommunikationsmanagement benutzte Konfigurationsdatenbasis. Der Inhalt der MIB ist stets ein Abbild des aktuellen Systemzustands, soweit für das Kommunikationsmanagement relevant. Änderungen und Neueinträge erfolgen über die MIB-API. Die MIB ist im nichtflüchtigen Speicher gesichert.

Jeder Eintrag beinhaltet vorzugsweise folgende Felder. Zum einen bezüglich der Funkkommunikationssysteme Basiseinstellungen zugehöriger Geräte, Verfügbarkeit der angeschlossenen Geräte und Systemkostenfaktor sowie zum anderen bezüglich der Anwendungsfunktionen Felder über Priorität, Ausgabeziel, d.h. Rufnummern, fahrzeugseitiges Ziel, d.h. von der Anwendung betroffenes, fahrzeugseitiges Gerät, das verwendete Protokoll und damit zusammenhängende Bedingungen, Wiederholstrategien bezüglich Telefonnummern, Funkkanal und Antenne, Strategien über Systempräferenzen bezüglich der verschiedenen Funkkommunikationssysteme, Felder über erlaubte eingehende Anrufnummern, über eine Rufnummertabelle für netzübergreifende Mobilfunkgespräche, ein verwendetes Verschlüsselungssystem, eine benötigte Signatur und über Autorisierung.

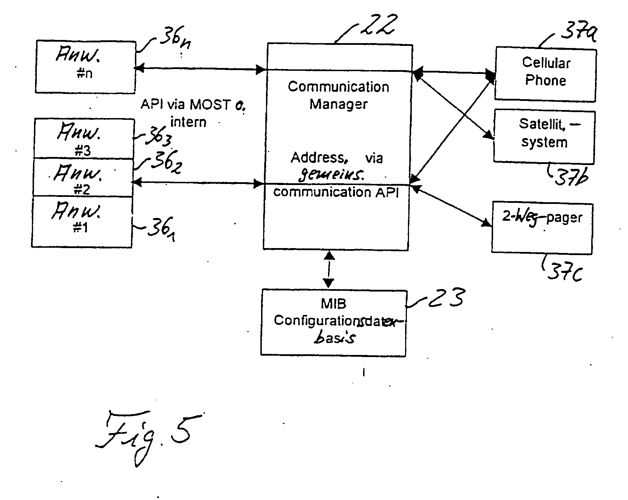

Das Kommunikationsmanagement ist eine der Hauptaufgaben der Kommunikationsplattformeinheit 4. Der Kommunikationsmanager 22 dient hierbei zur Sicherstellung eines korrekten Datenflusses und zur Steuerung des Gerätezugriffs. Das Kommunikationsmanagement hat folgende Hauptaufgaben. Erstens die Steuerung interner und angeschlossener Geräte, Dienste und Schnittstellen, insbesondere Initialisierung und Abschaltung, Gerätesteuerung im Normalbetrieb, Überwachung und Fehlerbehandlung. Zweitens die Zuweisung von Geräten und Diensten in Abhängigkeit von der Verfügbarkeit, einer abgelegten Prioritätsreihenfolge und weiteren Aspekten,wie Sicherheit, Kosten und Leistungsvermögen. Drittens eine Filter- und Routing-Funktion zur Sperrung von nicht autorisierten Zugriffen auf Anwendungen oder das fahrzeugseitige Netzwerk, zum Weiterleiten eingehender Daten zu internen oder vernetzten Anwendungseinheiten und zur zuweisung von Daten zu einem Ziel. viertens das Bereitstellen einer systemunabhängigen Kommunikationsschnittstelle, deren Funktionalität in Fig. 5 veranschaulicht ist. Sie beinhaltet eine Kommunikations-API mit vom Kommunikationssystem unabhängigem Anrufen und ein Kommunikationsmanagement, das die Informationen der konfigurierenden Managementinformationsbasis (MIB) nutzt. Auf diese Weise ist der Kommunikationsmanager 22, wie in Fig. 5 veranschaulicht, in der Lage, einerseits mit den fahrzeugseitig vorhandenen Anwendungen 36₁, ..., 36ₙ über eine gemeinsame interne oder MOST-Schnittstelle und andererseits variabel mit den über die gemeinsame Kommunikations-API adressierbaren, unterschiedlichen Funkkommunikationssystemen 37a, 37b, 37c unter Nutzung der Informationen aus der MIB zu kommunizieren, und zwar ohne feste Zuordnung der verschiedenen Funkkommunikationssysteme 37a, 37b, 37c zu den verschiedenen Anwendungen 36₁ bis 36ₙ.

In der Kommunikationsplattformeinheit 4, welche das äußere Gateway zur Kommunikation mit der Fahrzeugaußenwelt darstellt, ist in Anpassung an den jeweiligen Anwendungsfall ein ausreichendes Sicherheitskonzept implementiert, das insbesondere nicht autorisierte Zugriffe auf Komponenten, Anwendungen, Dienste und Informationen im Fahrzeug und speziell auch in der Kommunikationsplattformeinheit 4 verhindert, Zugriffe von der Standard-Benutzerschnittstelle streng auf die gewünschten Funktionalitäten limitiert und Zugriffe auf eines der Fahrzeug-Datennetzwerke auf solche begrenzt, die in einer konfigurierbaren Zugriffstabelle aufgelistet sind, wie sie in der MIB abgelegt ist. In der Kommunikationsplattformeinheit 4 sind zudem die erforderlichen Verschlüsselungsalgorithmen für die verschiedenen Anwendungen und Systemkomponenten in zugriffsgeschützter Weise implementiert. Ein Autorisierungseintrag in der MIB gibt für jede registrierte Anwendung an, welche Transaktionen von eingehenden Verbindungen oder Datenpaketen erlaubt sind. Insbesondere definiert dieser Eintrag, von welcher Rufnummer aus auf welche internen Anwendungsfunktionen oder -geräte zugegriffen werden darf, wobei der Eintrag nur durch eine autorisierte Instanz geändert oder erzeugt werden kann.

Mit der Filter- und Routingfunktion werden alle eingehenden Daten gefiltert, bevor sie dann dem Ziel zugeleitet werden. Keine der eingehenden Datenverbindungen hat direkten Zugriff auf fahrzeugseitige Geräteeinheiten, und jedes eingehende Datenpaket wird einer Anwendung zugeordnet. Unbekannte Datenpakete werden unterdrückt. Sicherheitsanwendungen erfordern eine Signaturprüfung anhand der in der MIB abgelegten Signaturen, bevor ein Datenpaket in das Fahrzeug gesendet wird. Auch IP-Kommunikationsvorgänge werden durch hierfür geläufige Maßnahmen gesichert. Als weitere Eigenschaft des Kommunikationsmanagements werden Java-Applets erkannt und unterstützt. Die Java-Applets werden nicht auf der Hardware der Kommunikationsplattformeinheit 4, sondern auf einer Mehrzweckplattform (MPP) zum Laufen gebracht,

Eine weitere wichtige Eigenschaft des Kommunikationsmanagements besteht in einer Prioritätszuweisung zu den einzelnen Anwendungen, die auf die verschiedenen Funkkommunikationskanäle zugreifen können, in Form einer in der MIB abgelegten Prioritätsliste. Der Kommünikationsmanager verwendet diesen Eintrag bei der Zuweisung der Funkkommunikationssysteme, der Kanalzugriffe und der Pufferkapazität. Die Prioritätszuweisung beinhaltet mehrere Prioritätsklassen. Anwendungen einer bestimmten Prioritätsklasse führen nicht zu einer Unterbrechung von Anwendungen derselben oder einer höheren Prioritätsklasse. Lediglich Kommunikationsaufrufe niedrigerer Prioritätsklassen werden unterbrochen bzw. unterdrückt, wenn notwendig.

Mit den Telematik-APIs läßt sich ein gemeinsamer, einheitlicher Befehlsatz unabhängig von den verwendeten Geräteeinheiten, wie GSM- oder AMPS-Komponenten, und unabhängig von der Lokalisierung der Anwendung realisieren, d.h. unabhängig davon, ob es sich um eine interne oder eine vernetzte Anwendung handelt. Dazu werden APIs wenigstens für die Bereiche Mobiltelefon, Lokalisierung, MIB-Manipulation und Fahrzeugkomponenten verwendet. Die APIs für die Benutzerschnittstelle (MMI) und für Navigation sind jeweils .der richtigen Schnittstelle zuzuordnen. Jede der Telematik-APIs beinhaltet einen spezifischen Funktionssatz, und jeder Aufruf gibt wenigstens das Ergebnis des angerufenen Dienstes zurück. Außerdem wird eine Information über die Verfügbarkeit eines Gerätes oder Dienstes abgegeben. Der Zugriff zu einer jeweiligen Telematik-API wird vom Kommunikationsmanagement gesteuert. Von diesem kann eine Liste verfügbarer APIs und Funktionen angefordert und an die Anwendung weitergeleitet werden. Die Telematik-APIs sind so in die Telematik-Gesamtarchitektur eingebunden, daß ein Höchstmaß an Kompatibilität und Flexibilität zwischen den Telematik-Komponenten gewährleistet wird. Die meisten dieser APIs sind im jeweiligen Gerät und über den Telematik-Bus (MOST) verfügbar, wobei der Zugriff in der MIB definiert ist. Jeder Anruf beinhaltet eine Ruf-ID, eine Identifikation der anrufenden Anwendung, eine Identifikation der jeweiligen Sitzung (Session-ID), eine Identifikation der anrufenden Anwendung und Nutzdaten. Anwendungsspezifische Anrufe sollten vermieden werden. Auf einige wichtige Telematik-APIs wird nachstehend eingegangen.

Die API für Mobilfunkkommunikation stellt eine systemunabhängige, logische und Hardware-Schnittstelle zu Diensten für interne und vernetzte Anwendungen dar und kann von einem synchronen oder asynchronen Typ sein. Als Dienste bearbeitet diese API insbesondere das Öffnen und Schließen virtueller Verbindungen, das Senden und Empfangen von Daten, Telefonbefehle, das Wählen spezieller Nummern für spezielle Dienste, Herstellen einer Sprachverbindung, Öffnen und Schließen einer Faxverbindung, spezielles IP-Verbindungsmanagement sowie Rückruffunktionen vom Kommunikationsmanager bezüglich Notifizierung und Kommunikationsresultaten.

Eine Lokalisierungs-API stellt eine hardware-unabhängige, logische Schnittstelle zu Diensten für interne und vernetzte Anwendungen dar, wobei diese Dienste insbesondere aus Informationsteilen, wie sie im NMEA-Befehlsatz und der Intra-GSM-Spezifikation enthalten sind, aus zuletzt gültigen SSN-Daten, aus D-SSN-Daten, aus Zeit- und Datumsangaben sowie aus Fahrzeuggeschwindigkeits- und Fahrzeugrichtungsinformationen bestehen.

Über eine als logische Schnittstelle realisierte MIB-API erfolgt das Erzeugen und Löschen sowie Ändern und Lesen von ganzen Einträgen oder Feldern hiervon in der MIB. Eine Fahrzeug-API dient zur Gewinnung von Fahrzeuginformationen, wie der Fahrzeugidentifikationsnummer, und von Fahrzeugparametern, wie Motortemperatur, Tankfüllstand etc., und bildet eine logische, hardwareunabhängige Schnittstelle zu diesen Diensten für interne und vernetzte Anwendungen.

Die Kommunikationsplattformeinheit 4 unterstützt an Protokollen insbesondere die für Europa relevanten Protokolle ACP und GATS, das für USA relevante Protokoll ICD, das für Japan relevante Protokoll DoCoMo und das WAP-Protokoll sowie Protokolle niedrigerer Ebene, wie Modem-Protokolle, Fax-Protokolle, Datenkompression und TCP-IP-Unterstützung über PPP. Des weiteren ist die Standard-Benutzerschnittstelle so ausgelegt, daß sie einen Teil des AT+C(GSM:AT)-Befehlsatzes unterstützt, um als ein Standard-Modem zu fungieren, mit dem auf Windows basierende Computer arbeiten können, ohne zusätzliche Software oder Treiber zu benötigen. Über diese Schnittstelle sind zudem Faxdienste und Internet-Verbindungen möglich. Des weiteren unterstützt die Standard-Benutzerschnittstelle einen Befehlsatz derart, daß sie als Standard-SSN-Empfänger fungiert. Ein auf Windows basierender Rechner arbeiter mit diesem SSN-Empfänger, ohne daß zusätzliche Software oder Treiber erforderlich sind. Auf den internen PPP-Server kann über die Standard-Benutzerschnittstelle durch Anrufen einer bestimmten Nummer mit der Modem-Treibersoftware eines Laptops, HPC oder PDA zugegriffen werden. Der Zugriff zu internen und vernetzten Anwendungen ist außerdem über einen API-Ruf moglich. Zugriff auf die WAP-Verbindungsfähigkeit kann über die Standard-Benützerschnittstelle oder durch verteilte Anwendungen erhalten werden.

Das Kommunikationssystem ist außerdem in der Lage, das komplette Herunterladen von Software über eine drahtlose oder eine CAN-Schnittstelle zu unterstützen. Das Herunterladen verändert die Einträge in der MIB nicht. Zum Starten eines solchen Vorgangs ist eine spezielle Signatur zu verwenden. Die Konfiguration der Parameter für die Anwendung und für die MIB ist über eine CAN-Schnittstelle oder über eine Funkschnittstelle möglich und kann am Ende der Produktion, in einer Werkstatt oder per Fernkommunikation von einer Dienstezentrale aus erfolgen.

Während des Hochlaufens führt die Kommunikationsplattformeinheit einen Eigentest aus, der ihre Speicher und internen Komponenten umfaßt. Im Normalbetrieb werden kritische Funktionen regelmäßig überprüft. Die Diagnosefunktion umfaßt zudem die Messung der Antennenverbindungen für die Antennen des eingebetteten Funkkommunikationssystems, um zu erkennen, wenn die betreffende Komponente fehlt. Im übrigen erfüllt das Gesamtsystem fahrzeugspezifische Anforderungen hinsichtlich Aufbau, Größe, Schock- und Fallversuchen, Materialien, Umweltverträglichkeit und Stromversorgungsmanagement.

Es versteht sich, daß neben dem oben beschriebenen Ausführungsbeispiel weitere Realisierungen des erfindungsgemäßen Kommunikationssystems in je nach Anwendungsfall modifizierter Weise möglich sind, wobei jeweils charakteristisch ist, daß. eine zentrale Kommunikationsplattformeinheit vorgesehen ist, welche die fahrzeugseitigen Anwendungseinheiten variabel an mehrere unterschiedliche Funkkommunikationskanäle anbindet.

## Patentansprüche

1. Kommunikationssystem für ein Fahrzeug, mit
- einer oder mehreren, fahrzeugseitigen Anwendungseinheiten (1) zur Durchführung zugehöriger Anwendungsfunktionen und
- mehreren Funkkommunikationskanälen (3a, 3b, 3c, 3d) zur Kommunikation der Anwendungseinheiten mit der Fahrzeugaußenwelt,
**gekennzeichnet durch**
- eine zentrale Kommunikationsplattformeinheit (4) zur variablen Anbindung der einen oder mehreren Anwendungseinheiten (1) an die mehreren Funkkommunikationskanäle (3a, 3b, 3c, 3d)

2. Kommunikationssystem nach Anspruch 1, weiter
**dadurch gekennzeichnet, daß**
die Kommunikationsplattformeinheit (4) ein separates Hardwaremodul des Kommunikstionssystems bildet.

3. Kommunikationssystem nach Anspruch 1 oder 2, weiter
**dadurch gekennzeichnet, daß**
der Kommunikationsplattformeinheit (4) eine Reservebatterie (9) zugeordnet ist.

4. Kommunikationssystem nach einem der Ansprüche 1 bis 3, weiter
**dadurch gekennzeichnet, daß**
die Anwendungseinheiten (7a bis 7e) an einen gemeinsamen Datenbus (6) angeschlossen sind, an den die Kommunikationsplattformeinheit (4) angekoppelt ist.

5. Kommunikationssystem nach einem der Ansprüche 1 bis 4, weiter
**dadurch gekennzeichnet, daß**
als über die Kommunikationsplattformeinheit (4) variabel an die mehreren Funkkommunikationskanäle (3a bis 3d) anbindbaren Anwendungseinheiten (7a bis 7e) solche zur Durchführung einer oder mehrerer interner Anwendungsfunktionen und einer oder mehrerer externer, vernetzter Anwendungsfunktionen vorgesehen sind.

6. Kommunikationssystem nach einem der Ansprüche 1 bis 5, weiter
**dadurch gekennzeichnet, daß**
in der Kommunikationsplattformeinheit (4) Systemmanagementinformationen über Geräte-Basiseinstellungen und Verfügbarkeit von nutzbaren Funkkomnunikationskanälen und über eine vorgebbare Prioritätseinstufung der durchführbaren Anwendungsfunktionen abgelegt sind.

7. Kommunikationssystem nach einem der Ansprüche 1 bis 6, weiter
**dadurch gekennzeichnet, daß**
die Kommunikationsplattformeinheit (4) eine Kommunikations-Managementeinheit (22) enthält, welche die anwendungsfunktionsbezogenen Geräte, Dienste und Schnittstellen steuert und die Geräte und Dienste in Abhängigkeit von der Verfügbarkeit und einer vorgebbaren Prioritätseinstufung aktiviert.

8. Kommunikationssystem nach einem der Ansprüche 1 bis 7, weiter
**dadurch gekennzeichnet, daß**
in der Kommunikationsplattformeinheit (4) Anwendungsfunktions-Schnittstelleneinheiten (API) für die verschiedenen Anwendungsfunktionen derart implementiert sind, daß unabhängig vom benutzten Funkkomnunikationskanal und unabhängig davon, ob eine interne oder externe, vernetzte Anwendungsfunktion vorliegt, ein einheitlicher Befehlsatz gilt.

## Claims

1. Communications system for a vehicle, with
- one or more application units (1) in the vehicle for carrying out associated application functions, and
- a plurality of radiocommunication channels (3a, 3b, 3c, 3d) for communication between the application units and the vehicle-external world,
**characterised in that**
- it comprises a central communications platform unit (4) for the variable connection of the one or more application units (1) to the plurality of radiocommunication channels (3a, 3b, 3c, 3d).

2. Communications system according to Claim 1, further
**characterised in that**
the communications platform unit (4) forms a separate hardware module of the communications system.

3. Communications system according to Claims 1 or 2, further
**characterised in that**
the communications platform unit (4) is associated with a reserve battery (9).

4. Communications system according to any of Claims 1 to 3, further
**characterised in that**
the application units (7a to 7e) are connected to a common data bus (6), to which the communications platform unit (4) is coupled.

5. Communications system according to any of Claims 1 to 4, further
**characterised in that**
as the application units (7a to 7e) that can be variably connected by the communications platform unit (4) to the plurality of radiocommunication channels (3a to 3d), ones are provided which perform one or more internal application functions and one or more external, linked application functions.

6. Communications system according to any of Claims 1 to 5, further
**characterised in that**
in the communications platform unit (4), system management information is stored on device-based adjustments, on the availability of usable radiocommunication channels, and on a specifiable priority grading of the application functions that can be carried out.

7. Communications system according to any of Claims 1 to 6, further
**characterised in that**
the communications platform unit (4) contains a communications management unit (22), which controls the application-function-related devices, services and interfaces and which activates the devices and services in accordance with availability and as a function of a specifiable priority grading.

8. Communications system according to any of Claims 1 to 7, further
**characterised in that**
in the communications platform unit (4) application function interface units (APIs) for the various application functions are implemented in such manner that, independently of the radiocommunication channel and independently of whether an internal or external, linked application function is in progress, a uniform set of control signals can be used.

## Revendications

1. Système de communication pour un véhicule automobile, comportant
- une ou plusieurs entités d'application (1) côté véhicule automobile pour exécuter des fonctions d'application correspondantes et
- plusieurs canaux de communication par radio (3a, 3b, 3c, 3d) pour la communication des entités d'application avec l'environnement du véhicule automobile,
**caractérisé par** une unité de plate-forme de communication centrale (4) pour le raccordement variable d'une ou plusieurs entités d'application (1) aux multiples canaux de communication par radio (3a, 3b, 3c, 3d).

2. Système de communication selon la revendication 1, **caractérisé en outre en ce que** l'unité de plate-forme de communication (4) forme un module matériel séparé du système de communication.

3. Système de communication selon la revendication 1 ou 2, **caractérisé en outre en ce qu'**une batterie de réserve (9) est affectée à l'unité de plate-forme de communication (4).

4. Système de communication selon l'une quelconque des revendications 1 à 3, **caractérisé en outre en ce que** les entités d'application (7a à 7e) sont raccordées à un bus de données commun (6) auquel l'unité de plate-forme de communication (4) est couplée.

5. Système de communication selon l'une quelconque des revendications 1 à 4, **caractérisé en outre en ce que** des entités d'application adaptées à l'exécution d'une ou de plusieurs fonctions d'application internes et d'une ou de plusieurs fonctions d'application internes en réseau sont prévues en tant qu'entités d'application (7a à 7e) pouvant se raccorder de manière variable par l'unité de plate-forme de communication (4) aux multiples canaux de communication par radio (3a, 3b, 3c, 3d).

6. Système de communication selon l'une quelconque des revendications 1 à 5, **caractérisé en outre en ce que** des informations de gestion du système sur les réglages de base d'appareils et la disponibilité de canaux de communication par radio utilisables et sur une classification de priorités prédéfinissable des fonctions d'application exécutables sont déposées dans l'unité de plate-forme de communication (4).

7. Système de communication selon l'une quelconque des revendications 1 à 6, **caractérisé en outre en ce que** l'unité de plate-forme de communication (4) contient une unité de gestion de communication (22) qui commande les appareils, services et interfaces se rapportant aux fonctions d'application et qui active les appareils et services en fonction de la disponibilité et d'une classification de priorités prédéfinissable.

8. Système de communication selon l'une quelconque des revendications 1 à 7, **caractérisé en outre en ce que** des unités d'interface de fonctions d'application (API) sont implémentées dans l'unité de plate-forme de communication (4) pour les différentes fonctions d'application de manière telle que, indépendamment du canal de communication par radio et indépendamment de ce qu'une fonction utilisatrice en réseau, interne ou externe, soit présente, un jeu de commandes uniforme s'applique.
